(19) Europäisches Patentamt
European Patent Office
Office européen des brevets

(11) Veröffentlichungsnummer: **0 278 258 A1**

(12) **EUROPÄISCHE PATENTANMELDUNG**

(21) Anmeldenummer: 88100644.9

(51) Int. Cl.4: C07F 9/58 , A01N 57/24

(22) Anmeldetag: 19.01.88

(30) Priorität: 31.01.87 DE 3702921

(43) Veröffentlichungstag der Anmeldung:
17.08.88 Patentblatt 88/33

(84) Benannte Vertragsstaaten:
BE CH DE FR GB IT LI NL

(71) Anmelder: BAYER AG
D-5090 Leverkusen 1, Bayerwerk(DE)

(72) Erfinder: Pfister, Theodor, Dr.
Lichtenberger Strasse 30
D-4019 Monheim(DE)
Erfinder: Santel, Hans-Joachim, Dr.
Grünstrasse 9a
D-5090 Leverkusen 1(DE)
Erfinder: Schmidt, Robert R., Dr.
Im Waldwinkel 110
D-5060 Bergisch-Gladbach 2(DE)
Erfinder: Strang, Robert Harry, Dr.
Unterdorfstrasse 6A
D-4000 Düsseldorf 31(DE)

(54) **Substituierte (Phenoxy-benzoyloxy)-(pyridyl)-methan (thio)-phosphonsäureester, Verfahren zu ihrer Herstellung und ihre Verwendung als Herbizide.**

(57) Verbindungen der allgemeinen Formel

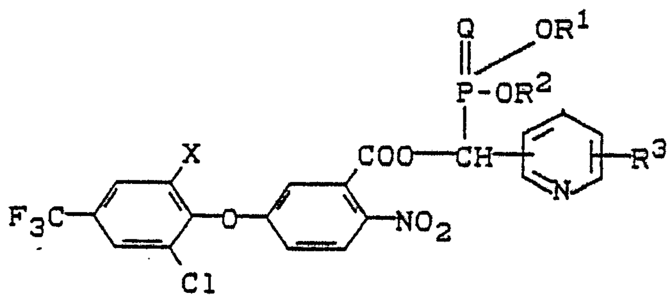

in welcher
Q für Sauerstoff oder Schwefel steht,
$R^1$ und $R^2$ gleich oder verschieden sind und für gegebenenfalls durch Halogen substituiertes $C_1$-$C_4$-Alkyl stehen,
$R^3$ für Wasserstoff, Halogen oder $C_1$-$C_4$-Alkyl steht
und
X für Wasserstoff oder Halogen steht,
ein Verfahren zu ihrer Herstellung und deren Verwendung als Herbizide.

EP 0 278 258 A1

## Substituierte (Phenoxybenzoyloxy)-(pyridyl)-methan(thio)phosphonsäureester, Verfahren zu ihrer Herstellung und ihre Verwendung als Herbizide

Die Erfindung betrifft neue substituierte (Phenoxybenzoyloxy)-(pyridyl)-methan(thio)phosphonsäureester, ein Verfahren zu ihrer Herstellung und ihre Verwendung als Herbizide.

Es ist bereits bekannt, daß zahlreiche Phenoxybenzoesäure-Derivate herbizide Eigenschaften besitzen (vgl. US-P 4 063 929). So kann zum Beispiel das Natriumsalz der 3-(2-Chlor-4-trifluormethyl-phenoxy)-6-nitro-benzoesäure zur Bekämpfung von Unkraut eingesetzt werden. Die Wirkung dieses Stoffes ist gut, jedoch werden bei geringen Aufwandmengen einige Unkräuter nicht immer voll erfaßt.

Es wurden nun neue substituierte (Phenoxybenzoyloxy)-(pyridyl)-methan(thio)phosphonsäureester der allgemeinen Formel (I)

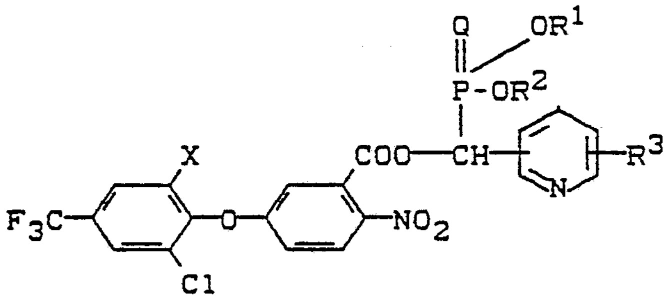

(I)

in welcher

Q für Sauerstoff oder Schwefel steht,

$R^1$ und $R^2$ gleich oder verschieden sind und für gegebenenfalls durch Halogen substituiertes $C_1$-$C_4$-Alkyl stehen,

$R^3$ für Wasserstoff, Halogen oder $C_1$-$C_4$-Alkyl steht und

X für Wasserstoff oder Halogen steht,

gefunden.

Die Erfindung betrifft sowohl die einzelnen möglichen stereoisomeren Formen von Verbindungen der allgemeinen Formel (I) als auch deren Gemische.

Weiterhin wurde gefunden, daß man die neuen substituierten (Phenoxybenzoyloxy)-(pyridyl)-methan-(thio)phosphonsäureester der allgemeinen Formel (I) erhält, wenn man substituierte Phenoxybenzoesäurechloride der allgemeinen Formel (II)

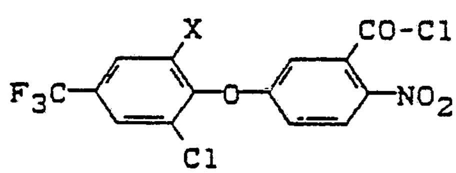

(II)

in welcher

X die oben angegebene Bedeutung hat,

mit (Pyridyl)-hydroxymethan(thio)phosphonsäureestern der allgemeinen Formel (III)

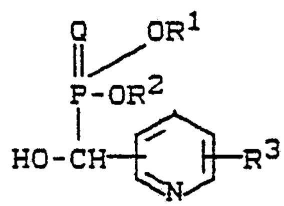

(III)

in welcher

Q, $R^1$, $R^2$ und $R^3$ die oben angegebenen Bedeutungen haben, gegebenenfalls in Gegenwart eines Säurebindemittels und gegebenenfalls in Gegenwart eines Verdünnungsmittels umsetzt.

Schließlich wurde gefunden, daß die neuen substituierten (Phenoxybenzoyloxy)-(pyridyl)-methan(thio)-phosphonsäureester hervorragende herbizide Wirkung zeigen.

Überraschenderweise sind die erfindungsgemäßen substituierten (Phenoxybenzoyloxy)-(pyridyl)-methan(thio)phos phonsäureester der allgemeinen Formel (I) gegen einige wichtige Unkräuter wesentlich wirksamer und besitzen wesentlich bessere selektive Eigenschaften als das Natriumsalz der 3-(2-Chlor-4-trifluormethyl-phenoxy)-6-nitro-benzoesäure, welches ein strukturell ähnlicher, vorbekannter Wirkstoff analoger Wirkungsrichtung ist.

Gegenstand der Erfindung sind vorzugsweise Verbindungen der allgemeinen Formel (I), in welcher
Q für Sauerstoff oder Schwefel steht,
$R^1$ und $R^2$ gleich sind und für Methyl, Ethyl, Chlorethyl, n-und iso-Propyl oder n-Butyl stehen,
$R^3$ für Wasserstoff, Chlor oder Methyl steht und
X für Wasserstoff, Fluor oder Chlor steht.

Die Erfindung betrifft insbesondere Verbindungen der allgemeinen Formel (I), in welcher
Q für Sauerstoff steht,
$R^1$ und $R^2$ gleich sind und für Methyl oder Ethyl stehen,
$R^3$ für Wasserstoff steht und
X für Wasserstoff oder Chlor steht.

Verwendet man beim erfindungsgemäßen Verfahren zur Herstellung von Verbindungen der allgemeinen Formel (I) beispielsweise 3-(2,6-Dichlor-4-trifluormethylphenoxy)-6-nitro-benzoe-säurechlorid und α-(2-Pyridyl)-hydroxymethanthiophosphonsäuredimethylester als Ausgangsstoffe, so kann der Verlauf des erfindungsgemäßen Verfahrens durch das folgende Formelschema wiedergegeben werden:

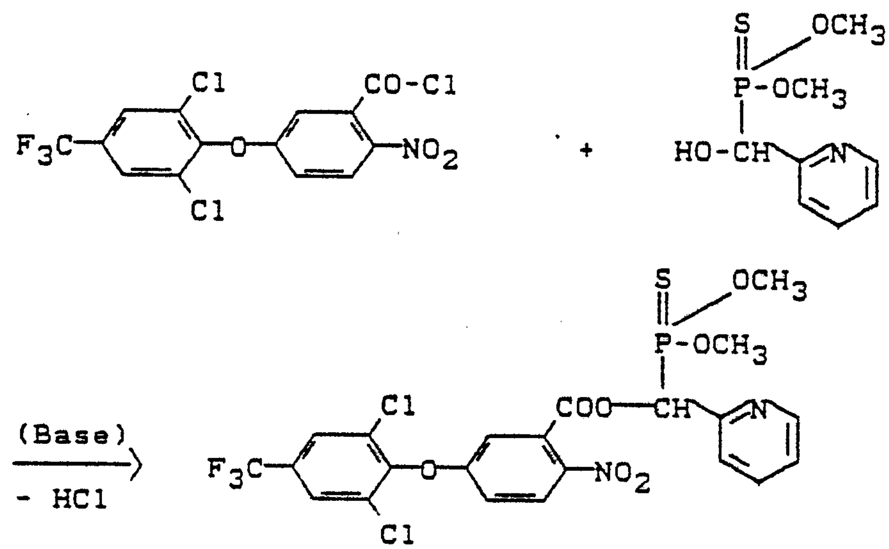


Die bei dem erfindungsgemäßen Verfahren als Ausgangsstoffe benötigten Phenoxybenzoesäurechloride sind durch die allgemeine Formel (II) definiert. In dieser Formel hat X vorzugsweise diejenigen Bedeutungen, die bereits im Zusammenhang mit der Beschreibung der erfindungsgemäßen Verbindungen der allgemeinen Formel (I) vorzugsweise für diesen Rest genannt wurden.

Als Beispiele für die Verbindungen der allgemeinen Formel (II) seien genannt:
3-(2-Chlor-4-trifluormethyl-phenoxy)-6-nitro-benzoesäurechlorid, 3-(2,6-Dichlor-4-trifluormethyl-phenoxyl)-6-nitro-benzoesäurechlorid und 3-(2-Chlor-6-fluor-4-tri fluormethyl-phenoxy)-6-nitro-benzoesäurechlorid.

Die Phenoxybenzoesäurechloride der allgemeinen Formel (II) sind bekannt oder lassen sich nach bekannten Verfahren in einfacher Weise herstellen (vgl. DE-OS 2 311 638, EP-OS 63 741 und EP-OS 122 037).

Die beim erfindungsgemäßen Verfahren weiter als Ausgangsstoffe benötigten (Pyridyl)-hydroxymethan-(thio)phosphonsäureester sind durch die allgemeine Formel (III) definiert. In dieser Formel haben Q, $R^1$, $R^2$ und $R^3$ vorzugsweise diejenigen Bedeutungen, die bereits im Zusammenhang mit der Beschreibung der erfindungsgemäßen Verbindungen der allgemeinen Formel (I) vorzugsweise für diese Reste genannt

wurden.

Beispiele für die Ausgangsstoffe der allgemeinen Formel (III) sind in der nachstehenden Tabelle 1 aufgeführt:

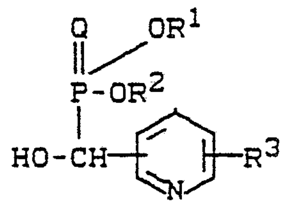 (III)

Tabelle 1: Ausgangsstoffe der Formel (III)

| Q | $R^1$ | $R^2$ | 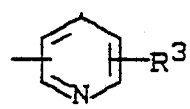 |
|---|---|---|---|
| O | $CH_3$ | $CH_3$ | 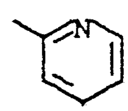 |

Tabelle 1 - Fortsetzung

| Q | $R^1$ | $R^2$ | 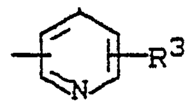 |
|---|---|---|---|
| S | $CH_3$ | $CH_3$ | 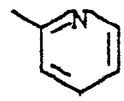 |
| O | $C_2H_5$ | $C_2H_5$ | 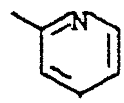 |
| S | $C_2H_5$ | $C_2H_5$ | 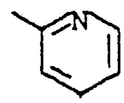 |
| O | $CH_2CH_2Cl$ | $CH_2CH_2Cl$ | 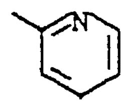 |
| O | $CH_2CH_2CH_3$ | $CH_2CH_2CH_3$ | 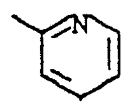 |
| O | $CH(CH_3)_2$ | $CH(CH_3)_2$ | 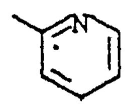 |
| O | $C_4H_9$ | $C_4H_9$ | 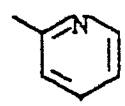 |
| O | $CH_3$ | $CH_3$ | 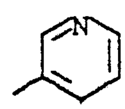 |
| S | $CH_3$ | $CH_3$ | 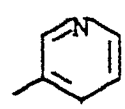 |
| O | $C_2H_5$ | $C_2H_5$ | 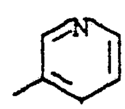 |

Tabelle 1 - Fortsetzung

| Q | $R^1$ | $R^2$ | 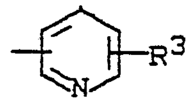 |
|---|---|---|---|
| S | $C_2H_5$ | $C_2H_5$ | 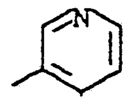 |
| O | $CH_3$ | $CH_3$ | 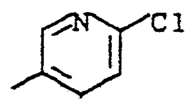 |
| O | $CH_3$ | $CH_3$ | 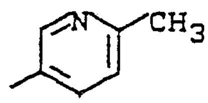 |
| O | $CH_3$ | $CH_3$ | 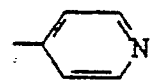 |
| S | $CH_3$ | $CH_3$ | 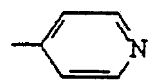 |
| O | $C_2H_5$ | $C_2H_5$ | 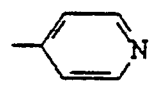 |
| S | $C_2H_5$ | $C_2H_5$ | 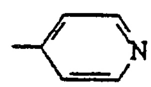 |
| O | $CH_2CH_2Cl$ | $CH_2CH_2Cl$ | 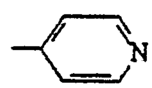 |
| O | $CH_2CH_2CH_3$ | $CH_2CH_2CH_3$ | 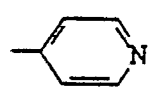 |
| O | $CH(CH_3)_2$ | $CH(CH_3)_2$ | 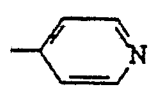 |

Die (Pyridyl)-hydroxymethan(thio)phosphonsäureester der allgemeinen Formel (III) sind bekannt und/oder können nach an sich bekannten Verfahren hergestellt werden (vgl. z. B. Houben-Weyl-Müller, "Methoden der organischen Chemie", Band 12/1, S. 475, Thieme-Verlag Stuttgart, Chem. Abstracts 91, 4854h und DE-OS 34 02 982).

Man erhält die Verbindungen der allgemeinen Formel (III), wenn man (Thio)Phosphorigsäureester der allgemeinen Formel (IV)

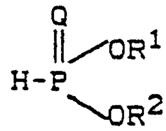

(IV)

in welcher
Q, $R^1$ und $R^2$ die oben angegebenen Bedeutungen haben,
mit Pyridin-carbaldehyden der allgemeinen Formel (V)

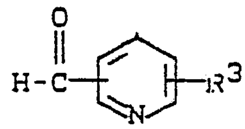

(V)

in welcher
$R^3$ die oben angegebene Bedeutung hat,
gegebenenfalls in Gegenwart eines Katalysators, wie z. B. Triethylamin, Natriumhydroxid oder basischem Aluminiumoxid, gegebenenfalls in Gegenwart eines Verdünnungsmittels, wie z. B. Chloroform oder Toluol, beim Tem peraturen zwischen 10 °C und 120 °C umsetzt.

Die Verbindungen der allgemeinen Formeln (IV) und (V) sind allgemein bekannte Stoffe.

Das erfindungsgemäße Verfahren zur Herstellung der neuen substituierten (Phenoxybenzoyloxy)-(pyridyl)-methan(thio)phosphonsäureester der Formel (I) wird vorzugsweise unter Verwendung von Verdünnungsmitteln durchgeführt. Als Verdünnungsmittel kommen dabei praktisch alle inerten organischen Lösungsmittel in Frage. Hierzu gehören vorzugsweise aliphatische und aromatische, gegebenenfalls halogenierte Kohlenwasserstoffe wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Dichlorbenzol, Ether wie Diethyl-und Dibutylether, Glykoldimethylether und Diglykoldimethylether, Tetrahydrofuran und Dioxan, Ketone wie Aceton, Methyl-ethyl-, Methyl-isopropyl-und Methyl-isobutylketon, Ester wie Essigsäuremethylester und-ethylester, Nitrile wie z. B. Acetonitril und Propionitril, Amide wie z. B. Dimethylformamid, Dimethylacetamid und N-Methyl-pyrrolidon sowie Dimethylphosphorsäuretriamid.

Als Säureakzeptoren können bei dem erfindungsgemäßen Verfahren alle üblicherweise für derartige Umsetzungen verwendbaren Säurebindemittel eingesetzt werden. Vorzugsweise in Frage kommen Alkalimetallhydroxide wie z. B. Natrium-und Kaliumhydroxid, Erdalkalihydroxide wie z. B. Calciumhydroxid, Alkalicarbonate und -alkoholate wie Natrium-und Kaliumcarbonat, Natrium-und Kaliummethylat bzw. -ethylat, ferner aliphatische, aromatische oder heterocyclische Amine, beispielsweise Triethylamin, Trimethylamin, Diethylanilin, Dimethylbenzylamin, Pyridin, 1,5-Diazabicyclo-[4,3,0]-non-5-en (DBN), 1,8-Diazabicyclo-[5,4,0]-undec-7-en (DBU) und 1,4-Diazabicyclo-[2,2,2]-octan (DABCO).

Die Reaktionstemperaturen können bei dem erfindungsgemäßen Verfahren in einem größeren Bereich variiert werden. Im allgemeinen arbeitet man bei Temperaturen zwischen 0 °C und 100 °C, vorzugsweise bei Temperaturen zwischen 10 °C und 80 °C.

Das erfindungsgemäße Verfahren wird im allgemeinen unter Normaldruck durchgeführt. Es ist jedoch auch möglich unter erhöhtem oder vermindertem Druck zu arbeiten.

Zur Durchführung des erfindungsgemäßen Verfahrens werden die jeweils benötigten Ausgangsstoffe im allgemeinen in angenähert äquimolaren Mengen eingesetzt. Es ist jedoch auch möglich, eine der beiden jeweils eingesetzten Komponenten in einem größeren Überschuß zu verwenden.

Die Reaktionen werden im allgemeinen in einem geeigneten Verdünnungsmittel in Gegenwart eines Säureakzeptors durchgeführt, und das Reaktionsgemisch wird mehrere Stunden bei der jeweils erforderlichen Temperatur gerührt. Die Aufarbeitung erfolgt bei dem erfindungsgemäßen Verfahren jeweils nach üblichen Methoden.

Die erfindungsgemäßen Wirkstoffe können als Defoliants, Desiccants, Krautabtötungsmittel und insbesondere als Unkrautvernichtungsmittel verwendet werden. Unter Unkraut im weitesten Sinne sind alle Pflanzen zu verstehen, die an Orten aufwachsen, wo sie unerwünscht sind. Ob die erfindungsgemäßen Stoffe als totale oder selektive Herbizide wirken, hängt im wesentlichen von der angewendeten Menge ab.

Die erfindungsgemäßen Wirkstoffe können z.B. bei den folgenden Pflanzen verwendet werden:

Dikotyle Unkräuter der Gattungen:Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea.

Dikotyle Kulturen der Gattungen:Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cucurbita.

Monokotyle Unkräuter der Gattungen:Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

Monokotyle Kulturen der Gattungen:Oryza, Zea, Triticum, Hordeum, Avena, Secale, Sorghum, Panicum, Saccharum, Ananas, Asparagus, Allium.

Die Verwendung der erfindungsgemäßen Wirkstoffe ist jedoch keineswegs auf diese Gattungen beschränkt, sondern erstreckt sich in gleicher Weise auch auf andere Pflanzen.

Die Verbindungen eignen sich in Abhängigkeit von der Konzentration zur Totalunkrautbekämpfung z.B. auf Industrie-und Gleisanlagen und auf Wegen und Plätzen mit und ohne Baumbewuchs. Ebenso können die Verbindungen zur Unkrautbekämpfung in Dauerkulturen, z.B. Forst, Ziergehölz-, Obst-, Wein-, Citrus-, Nuß-, Bananen-, Kaffee-, Tee-, Gummi-, Ölpalm-, Kakao-, Beerenfrucht-und Hopfenanlagen und zur selektiven Unkrautbekämpfung in einjährigen Kulturen eingesetzt werden.

Die erfindungsgemäßen Wirkstoffe der allgemeinen Formel (I) eignen sich sehr gut zur selektiven Bekämpfung dikotyler Unkräuter in monokotylen und dikotylen Kulturen im Vorauflauf-und im Nachauflauf-Verfahren, insbesondere im Nachauflaug-Verfahren.

Die Wirkstoffe können in die üblichen Formulierungen überführt werden, wie Lösungen, Emulsionen, spritzpulver, Suspensionen, Pulver, Stäubemittel, Pasten, lösliche Pulver, Granulate, Suspensions-Emulsions-Konzentrate, Wirkstoff-imprägnierte Naturstoffe und synthetische Stoffe sowie Feinstverkapselungen in polymeren Stoffen.

Diese Formulierungen werden in bekannter Weise hergestellt, z. B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder - schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.
Als feste Trägerstoffe kommen in Frage:
z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalten, Maiskolben und Tabakstengeln; als Emulgier-und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo-und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können als solche oder in ihren Formulierungen auch in Mischung mit bekannten Herbiziden zur Unkrautbekämpfung Verwendung finden, wobei Fertigformulierungen oder Tankmischungen möglich sind.

Für die Mischungen kommen bekannte Herbizide wie z.B. 1-Amino-6-ethylthio-3-(2,2-dimethylpropyl)-1,3,5-triazin-2,4(1H,3H)-dion oder N-(2-Benzthiazolyl)-N,N'-dimethylharnstoff zur Unkrautbekämpfung in Getreide; 4-Amino-3-methyl-6-phenyl-1,2,4-triazin-5(4H)-on zur Unkrautbekämpfung in Zuckerrüben und 4-Amino-6-(1,1-dimethylethyl)-3-methylthio-1,2,4-triazin-5(4H)-on zur Unkrautbekämpfung in Sojabohnen, in Frage. Auch Mischungen mit 4-Ethylamino-2-t-butylamino-6-methylthio-s-triazin; 4-Amino-6-t-butyl-3-ethylthio-1,2,4-triazin-5(4H)-on; 2-Chlor-N-{[(4-methoxy-6-methyl-1,3,5-triazin-2-yl)-amino]-carbonyl}-benzolsulfonamid; 2-{[((4-Methoxy-6-methyl-1,3,5-triazin-2-yl)-amino)-carbonyl]-amino]-sulfonyl}-benzoesäure oder deren Methylester; Ethyl-2-{[(4-chlor-6-methoxy-2-pyrimidinyl)-aminocarbonyl]-aminosulfonyl}-benzoat; 2-[5-Methyl-5-(1-methylethyl)-4-oxo-2-imidazolin-2-yl]-3-chinolincarbonsäure; 3,5-Diiod-4-hydroxybenzonitril; 3,5-Dibrom-4-hydroxy-benzonitril; 2,4-dichlorphenoxyessigsäure; 2,4-Dichlorphenoxypropionsäure; (4-Chlor-2-methylphenoxy)-propionsäure; 2-Methyl-4-chlorphenoxy)-essigsäure; 2-[1-(Ethoxamino)-butyliden]-5-(2-ethylthiopropyl)-1,3-cyclohexandion; Methyl-6,6-dimethyl-2,4-dioxo-3-[1-(2-propenyloxyamino)-butyliden]-cyclohexancarbonsäureester; 2-[1-(Ethoxyimino)-butyl]-3-hydroxy-5-(tetrahydro-2H-thiopyran-3-yl)-2-cyclohexen-1-on; 2-[4-(3,5-Dichlorpyrid-2-yloxy)-phenoxyl]-propionsäure-(trimethylsilylmethylester); 2-[4-(2,4-Dichlorphenoxy)-phenoxy]-propionsäure-methylester; 2-{4-[(3-Chlor-5-trifluormethyl-2-pyridinyl)-oxy]-phenoxy}-propansäure bzw. -propansäureethylester; [(4-Amino-3,5-dichlor-6-fluor-2-pyridinyl)-oxy]-essigsäure; bzw. -1-methylheptylester, Bentazon und Isoproturon sind möglich.

Auch eine Mischung mit anderen bekannten Wirkstoffen, wie Fungiziden, Insektiziden, Akariziden, Nematiziden, Schutzstoffen gegen Vogelfraß, Pflanzennährstoffen und Bodenstrukturverbesserungsmitteln ist möglich.

Die Wirkstoffe können als solche, in Form ihrer Formulierungen oder den daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Streuen.

Die erfindungsgemäßen Wirkstoffe können sowohl vor als auch nach dem Auflaufen der Pflanzen appliziert werden.

Sie können auch vor der Saat in den Boden eingearbeitet werden.

Die angewandte Wirkstoffmenge kann in einem größeren Bereich schwanken. Sie hängt im wesentlichen von der Artdes gewünschten Effektes ab. Im allgemeinen liegen die Aufwandmengen zwischen 0,01 und 10 kg Wirkstoff pro Hektar Bodenfläche, vorzugsweise zwischen 0,05 und 5 kg pro ha.

Die Herstellung und die Verwendung der erfindungsgemäßen Wirkstoffe geht aus den nachfolgenden Beispielen hervor.

Herstellungsbeispiele

Beispiel 1

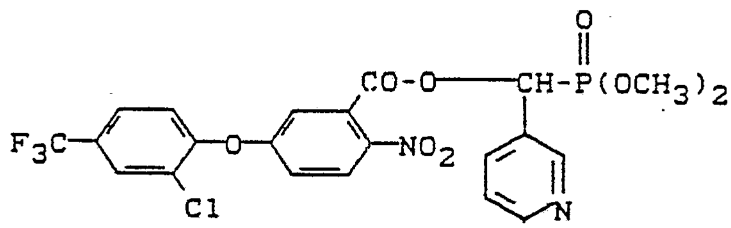

7,6 g (0,02 Mol) 5-(2-Chlor-4-trifluormethylphenoxy)-2-nitro-benzoesäurechlorid werden bei 20 °C bis 30 °C bis 30 °C unter Rühren zu einer Mischung aus 4,3 g (0,02 Mol) α-Hydroxy-α-(pyridin-3-yl)-methanphosphonsäure-dimethylester, 2 g (0,022 Mol) Pyridin und 50 ml Methylenchlorid gegeben. Das Reaktionsgemisch wird ca. 15 Stunden bei 20 °C gerührt, dann mit 1N-Salzsäure und mit gesättigter Sodalösung gewaschen, mit Natriumsulfat getrocknet und filtriert. Vom Filtrat werden die flüchtigen Komponenten unter vermindertem Druck sorgfältig abdestilliert.

Man erhält 4,7 g (42 % der Theorie) α-(5-(2-Chlor-4-trifluormethyl-phenoxy)-2-nitro-benzoyloxy)-α-(pyridin-3-yl)-methanphosphonsäure-dimethylester in Form blaßgelber Kristalle vom Schmelzpunkt 102 °C.

Analog Beispiel 1 und entsprechend den allgemeinen Angaben zur Herstellung können die folgenden Verbindungen der Formel (I) erhalten werden:

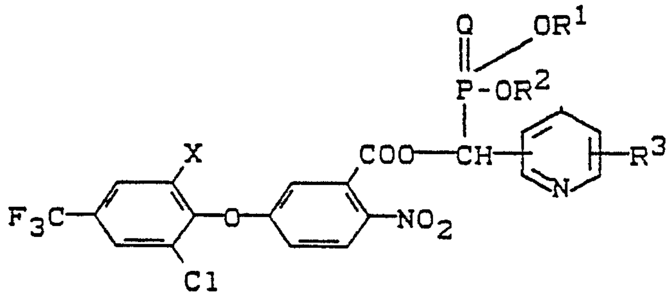

(I)

Tabelle 2: Verbindungen der Formel (I)

| Beisp.-Nr. | X | Q | $R^1$ | $R^2$ | 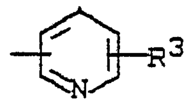 | Physikal. Konstante |
|---|---|---|---|---|---|---|
| 2 | H | O | $C_2H_5$ | $C_2H_5$ | 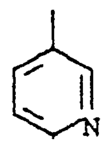 | $n_D^{22}$:1,5458 |
| 3 | H | O | $CH_3$ | $CH_3$ | 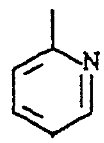 | Fp.: 73° C |
| 4 | H | O | $C_2H_5$ | $C_2H_5$ | 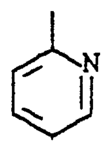 | Fp.:108° C |
| 5 | H | O | $CH_3$ | $CH_3$ | 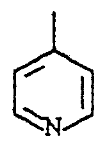 | |
| 6 | H | O | $C_2H_5$ | $CH_3$ | 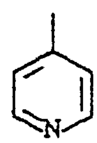 | |
| 7 | H | O | $C_2H_5$ | $C_2H_5$ | 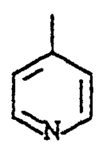 | |

Tabelle 2 - Fortsetzung

| Beisp.-Nr. | X | Q | $R^1$ | $R^2$ | 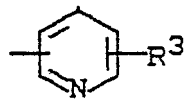 | Physikal. Konstante |
|---|---|---|---|---|---|---|
| 8 | Cl | O | $CH_3$ | $CH_3$ | 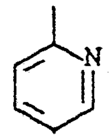 | |
| 9 | Cl | O | $C_2H_5$ | $C_2H_5$ | 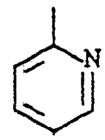 | |
| 10 | Cl | O | $CH_3$ | $CH_3$ | 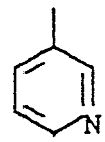 | |
| 11 | Cl | O | $C_2H_5$ | $C_2H_5$ | 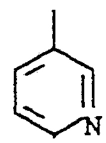 | |
| 12 | Cl | O | $CH_3$ | $CH_3$ | 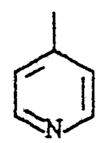 | |
| 13 | Cl | O | $C_2H_5$ | $C_2H_5$ | 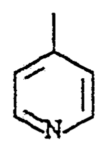 | |
| 14 | H | O | $CH(CH_3)_2$ | $CH(CH_3)_2$ | 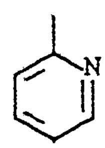 | |
| 15 | H | S | $CH_3$ | $CH_3$ | 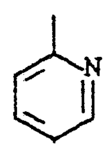 | |

Tabelle 2 - Fortsetzung

| Beisp.-Nr. | X | Q | $R^1$ | $R^2$ | 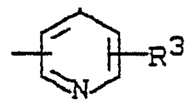 | Physikal. Konstante |
|---|---|---|---|---|---|---|
| 16 | Cl | S | $CH_3$ | $CH_3$ | 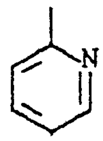 | |
| 17 | H | S | $C_2H_5$ | $C_2H_5$ | 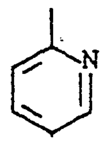 | |
| 18 | Cl | S | $C_2H_5$ | $C_2H_5$ | 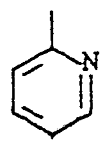 | |
| 19 | H | S | $C_4H_9$ | $C_4H_9$ | 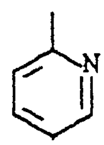 | |
| 20 | Cl | S | $C_4H_9$ | $C_4H_9$ | 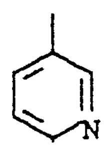 | |
| 21 | H | S | $CH(CH_3)_2$ | $CH(CH_3)_2$ | 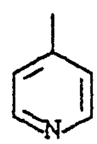 | |
| 22 | H | O | $CH_3$ | $CH_3$ | 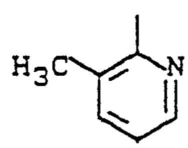 | |
| 23 | H | O | $CH_2CH_2Cl$ | $CH_2CH_2Cl$ | 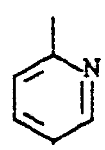 | |

Tabelle 2 - Fortsetzung

| Beisp.-Nr. | X | Q | $R^1$ | $R^2$ | 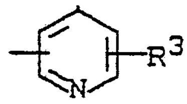 | Physikal. Konstante |
|---|---|---|---|---|---|---|
| 24 | H | O | $CH_2CH_2CH_3$ | $CH_2CH_2CH_3$ | 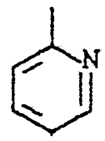 | |
| 25 | H | O | $CH_3$ | $CH_3$ | 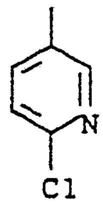 | |
| 26 | F | O | $CH_3$ | $CH_3$ | 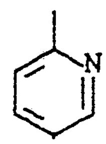 | |
| 27 | F | S | $CH_3$ | $CH_3$ | 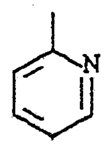 | |
| 28 | F | O | $CH_3$ | $CH_3$ | 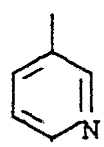 | |

Ausgangsstoffe der allgemeinen Formel (III)

Beispiel (III-1)

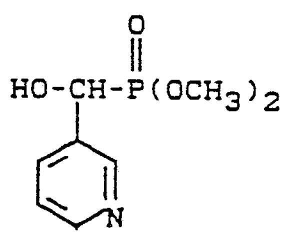

30 g Aluminiumoxid (basisch, Merck 1076) werden bei 20 °C bis 25 °C portionsweise unter Rühren zu einer Mischung aus 11 g (0,1 Mol) Dimethylphosphit, 10,7 g (0,1 Mol) Pyridin-3-carbaldehyd und 40 ml Chloroform gegeben. Das Reaktionsgemisch wird über Nacht bei 20 °C geführt, dann werden die feste und die flüssige Phase durch Absaugen getrennt. Die feste Phase wird noch einige Male mit frischem Chloroform extrahiert und die jeweils nach Absaugen erhaltenen Filtrate vereinigt, mit Natriumsulfat getrocknet und filtriert. Vom Filtrat wird das Lösungsmittel unter vermindertem Druck sorgfältig abdestilliert.

Man erhält 12 g (55 % der Theorie) α-Hydroxy-α-(pyridin-3-yl)-methanphosphonsäure-dimethylester in Form hellbrauner Kristalle vom Schmelzpunkt 125 °C (nach Unkristallisation aus Acetonitril).

Analog Beispiel (III-1) können die folgenden Verbindungen der Formel (III) hergestellt werden:

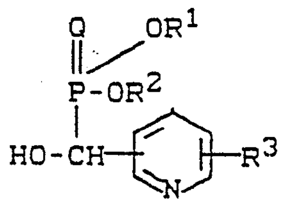

(III)

Tabelle 3: Verbindungen der allgemeinen Formel (III)

| Beisp.-Nr. | $R^1$ | $R^2$ | 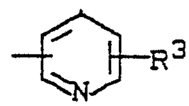 | Q | Physikal. Konstante |
|---|---|---|---|---|---|
| III-2 | $C_2H_5$ | $C_2H_5$ | 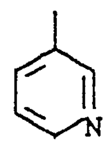 | O | Fp.: 92 °C |
| III-3 | $C_2H_5$ | $C_2H_5$ | 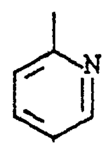 | O | (amorph) |
| III-4 | $CH_3$ | $CH_3$ | 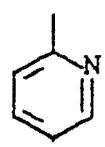 | O | (amorph) |
| III-5 | $CH_3$ | $CH_3$ | 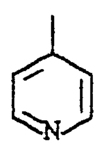 | O | |
| III-6 | $C_2H_5$ | $C_2H_5$ | 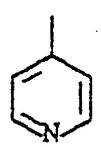 | O | |
| III-7 | $CH(CH_3)_2$ | $CH(CH_3)_2$ | 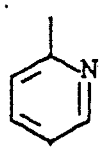 | O | |

Tabelle 3 - Fortsetzung

| Beisp.-Nr. | $R^1$ | $R^2$ | 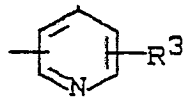 | Q | Physikal. Konstante |
|---|---|---|---|---|---|
| III-8 | $CH_3$ | $CH_3$ | 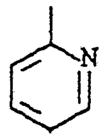 | S | |
| III-9 | $C_2H_5$ | $C_2H_5$ | 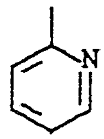 | S | |
| III-10 | $CH_3$ | $CH_3$ | 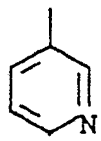 | S | |
| III-11 | $CH_3$ | $CH_3$ | 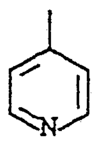 | S | |
| III-12 | $C_4H_9$ | $C_4H_9$ | 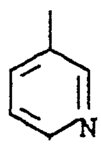 | S | |
| III-13 | $CH_2CH_2Cl$ | $CH_2CH_2Cl$ | 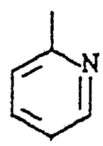 | O | |
| III-14 | $CH_2CH_2CH_3$ | $CH_2CH_2CH_3$ | 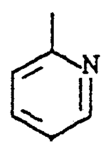 | O | |
| III-15 | $C_4H_9$ | $C_4H_9$ | 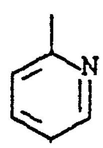 | O | |

Anwendungsbeispiel

Im folgenden Anwendungsbeispiel wird die nachstehend aufgeführte Verbindung als Vergleichssubstanz herangezogen:

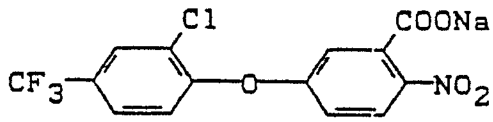

(A)

Natriumsalz der 3-(2-Chlor-4-trifluormethyl-phenoxy)-6-nitro-benzoesäure (bekannt aus US-P 4 063 929).

Beispiel A

Post-emergence-Test

Lösungsmittel: 5 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebenen Menge Emulgator zu und verdünnt das Konzentrat mit Wasser auf die gewünschte Konzentration.

Mit der Wirkstoffzubereitung spritzt man Testpflanzen, welche eine Höhe von 5 - 15 cm haben so, daß die jeweils gewünschten Wirkstoffmengen pro Flächeneinheit ausgebracht werden. Die Konzentration der Spritzbrühe wird so gewählt, daß in 2000 l Wasser/ha die jeweils gewünschten Wirkstoffmengen ausgebracht werden. Nach drei Wochen wird der Schädigungsgrad der Pflanzen bonitiert in % Schädigung im Vergleich zur Entwicklung der unbehandelten Kontrolle.

Es bedeuten:
0 % = keine Wirkung (wie unbehandelte Kontrolle)
100 % = totale Vernichtung

In diesem Test zeigen beispielsweise die Wirkstoffe gemäß den Herstellungsbeispielen (2), (3) und (4) bei der Bekämpfung von Unkräutern, wie z. B. Abutilon, Chenopodium, Sida und Xanthium, in Weizen stärkere Wirkung und bessere Selektivität als die Vergleichssubstanz (A).

**Ansprüche**

1. Substituierte (Phenoxybenzoyloxy)-(pyridyl)-methan(thio)phosphonsäureester der allgemeinen Formel (I)

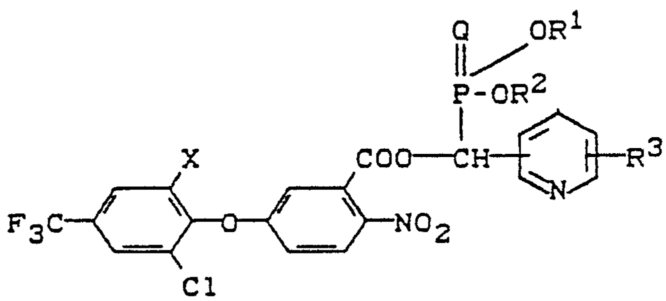

(I)

in welcher
Q für Sauerstoff oder Schwefel steht,
$R^1$ und $R^2$ gleich oder verschieden sind und für gegebenenfalls durch Halogen substituiertes $C_1$-$C_4$-Alkyl stehen,
$R^3$ für Wasserstoff, Halogen oder $C_1$-$C_4$-Alkyl steht und

X für Wasserstoff oder Halogen steht.

2. Verbindungen der allgemeinen Formel (I) gemäß Anspruch 1, in welcher Q für Sauerstoff oder Schwefel steht, $R^1$ und $R^2$ gleich sind und für Methyl, Ethyl, Chlorethyl, n-und iso-Propyl oder n-Butyl stehen, $R^3$ für Wasserstoff, Chlor oder Methyl steht und X für Wasserstoff, Fluor oder Chlor steht,

3. Verbindungen der allgemeinen Formel (I) gemäß Anspruch 1, in welcher Q für Sauerstoff steht, $R^1$ und $R^2$ gleich sind und für Methyl oder Ethyl stehen, $R^3$ für Wasserstoff steht und X für Wasserstoff oder Chlor steht.

4. Verfahren zur Herstellung von substiutierten (Phenoxybenzoyloxy)-(pyridyl)-methan(thio)-phosphonsäureestern der allgemeinen Formel (I)

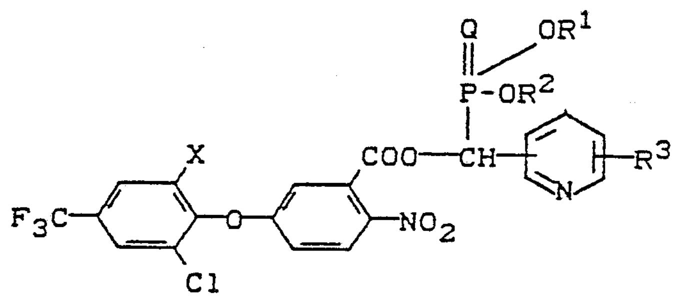

(I)

in welcher Q für Sauerstoff oder Schwefel steht, $R^1$ und $R^2$ gleich oder verschieden sind und für gegebenenfalls durch Halogen substituiertes $C_1$-$C_4$-Alkyl stehen, $R^3$ für Wasserstoff, Halogen oder $C_1$-$C_4$-Alkyl steht und X für Wasserstoff oder Halogen steht, dadurch gekennzeichnet, daß man substiutierte Phenoxybenzoesäurechloride der allgemeinen Formel (II)

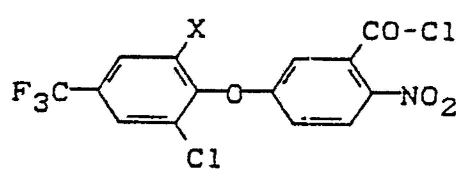

(II)

in welcher X die oben angegebene Bedeutung hat, mit (Pyridyl)-hydroxymethan(thio)phosphonsäureestern der allgemeinen Formel (III)

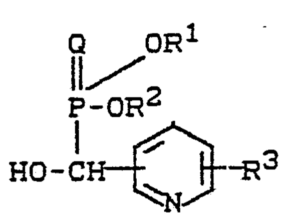

(III)

in welcher Q, $R^1$, $R^2$ und $R^3$ die oben angegebenen Bedeutungen haben, gegebenenfalls in Gegenwart eines Säurebindemittels und gegebenenfalls in Gegenwart eines Verdünnungsmittels umsetzt.

5. Herbizide Mittel, gekennzeichnet durch einen Gehalt an mindestens einem substiutierten (Phenoxybenzoyloxy)-(pyridyl)-1-methan(thio)phosphonsäureester der allgemeinen Formel (I) gemäß den Ansprüchen 1 bis 4.

6. Verfahren zur Bekämpfung von Unkräutern, dadurch gekennzeichnet, daß man substiutierte (Phenoxybenzoyloxy)-(pyridyl)-1-methan(thio)phosphonsäureester der allgemeinen Formel (I) gemäß den Ansprüchen 1 bis 4 auf die Unkräuter und/oder ihren Lebensraum einwirken läßt.

7. Verwendung von substituierten (Phenoxybenzoyloxy)-(pyridyl)-1-methan(thio)phosphonsäureestern der allgemeinen Formel (I) gemäß den Ansprüchen 1 bis 4 zur Bekämpfung von Unkräutern.

8. Verfahren zur Herstellung von herbiziden Mitteln, dadurch gekennzeichnet, daß man substituierte (Phenoxybenzoyloxy)-(pyridyl)-1-methan(thio)phosphonsäureester der allgemeinen Formel (I) gemäß den Ansprüchen 1 bis 4 mit Streckmitteln und/oder oberflächenaktiven Substanzen vermischt.

9. Verbindung der Formel

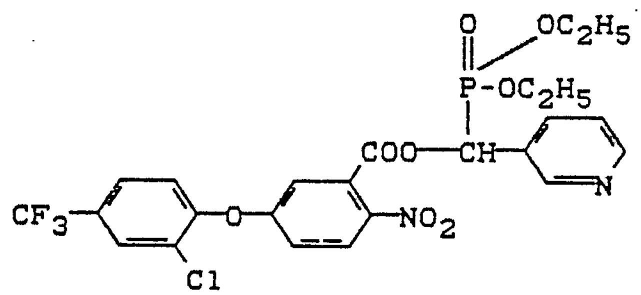

10. Verbindung der Formel

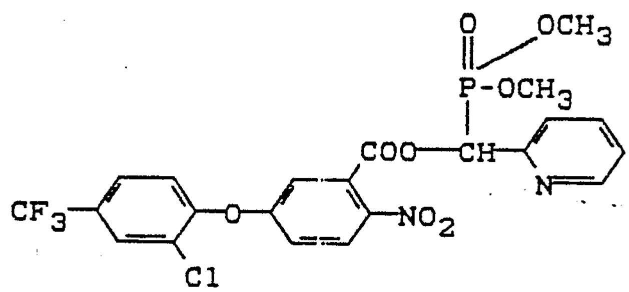

Europäisches Patentamt

# EUROPÄISCHER RECHERCHENBERICHT

Nummer der Anmeldung

EP 88 10 0644

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 165 203 (CIBA-GEIGY AG)<br>* Seiten 13-16, Beispiele 1,3, Tabelle 1; Ansprüche *<br>--- | 1-10 | C 07 F 9/58<br>A 01 N 57/24 |
| Y | EP-A-0 013 660 (CIBA-GEIGY AG)<br>* Seiten 9,10, Verbindungen 20,22; Ansprüche *<br>----- | 1-10 | |
| | | | RECHERCHIERTE SACHGEBIETE (Int. Cl.4) |
| | | | C 07 F 9/00 |

Der vorliegende Recherchenbericht wurde für alle Patentansprüche erstellt

| Recherchenort | Abschlußdatum der Recherche | Prüfer |
|---|---|---|
| DEN HAAG | 03-05-1988 | BESLIER L.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)